# EUROPEAN PATENT APPLICATION

(11) **EP 1 928 100 A1**
(43) Date of publication of application: **04.06.2008**
(21) Application number: 06024726.9
(22) Date of filing: 29.11.2006
(51) Int. Cl.: H04B 1/40, H04B 1/69

(54) **Method of controlling the operation of an UWB device and corresponding device**

(71) Applicant: STMicroelectronics N.V., 1118 BH Schiphol Airport Amsterdam (NL)
(72) Inventor: Berens, Friedbert, 1202 Geneva (CH)
(74) Representative: Zapalowicz, Francis

(57) **Abstract**

A method of controlling the operation of an UWB device, comprising providing said device with a first operation mode and a low duty cycle operation mode and selecting (32) the operation mode of said device.

## Description

The invention relates to the field of communications, and more particularly to the Ultra Wide Band (UWB) radio technology.

An application of the invention is for example the wireless personal area networks (WPAN) which are used to convey information over a relatively short distance among a relatively few participants.

An example of a wireless personal area network is a so-called "piconet" which is a wireless data communications system which allows a number of independent data devices to communicate with each other. A "piconet" is distinguished from other types of data networks in that communications are normally confined to a person or object that typically covers about 10 meters in all directions and envelops the person or a thing whether stationary or in motion.

Ultra Wide Band radio technology is well known by the man skilled in the art and departs from conventional narrow band radio and spread-spectrum technologies in that the bandwidth of the signal is large, typically at least 500 MHz wide. According to another definition, the UWB technology is a technology for short-range radiocommunication, involving the intentional generation and transmission of radio-frequency energy that spreads over a very large frequency range, which may overlap several frequency bands allocated to radiocommunication services. Devices using UWB technology typically have intentional radiation from the antenna with either a -10 dB bandwidth of at least 500 MHz or a -10dB fractional bandwidth greater than 0.2.

Within UWB radio technology, one can cite the UWB pulsed technology.

In UWB pulsed technology, instead of transmitting a continuous carrier wave modulated with information or with information combined with a spread code, which determines the bandwidth of the signal, a UWB radio transmits a series of very narrow impulses. For example, these impulses can take the form of a single cycle, or monocycle, having pulse widths less than 1 ns. These short time-domain impulses transformed into the frequency domain results in the ultra wide band spectrum of UWB radio.

The information conveyed on the signal, can be coded by a pulse position modulation (PPM). In other words, information coding is performed by altering the timing of the individual pulses. More precisely, the series of impulses is transmitted at a repetition rate of up to several Megahertz. Each pulse is transmitted within a window having a predetermined length (pulse repetition period), for example 50 ns. With respect to a nominal position, the pulse is in an early position or in a late position, which permits to encode a "0" or a "1". It is also possible to encode more than two values by using more than two positions shifted with respect to the nominal position. It is also possible to super impose a modulation of the BPSK type on this position modulation.

The invention is not limited to UWB pulsed technology but applies to the UWB technology in a general way, including also for example but non limitatively, devices operating according to the Ultra Wide Band (UWB) standard based on a Multiband OFDM (Orthogonal Frequency-Division Multiplexing), called MBOA (Multiband OFDM Alliance).

Orthogonal frequency-Division Multiplexing (OFDM) is a method of digital modulation in which a signal is split into several narrowband channels (sub-carriers) at different frequencies.

UWB devices of the second generation (2G UWB devices) will be the only devices allowed to be sold in Europe after a date to be defined, probably around December 2010/2012. These 2G UWB devices will implement a set of mitigation techniques, for example DAA (Detect And Avoid) techniques, allowing them to protect the potential victim services in the operational band between 3,1 GHz and 4,8 GHz. In other words, these 2G UWB devices are allowed to operate within a transmission power of -41,3 dBm/MHz in the complete band between 3,1 GHz and 4,8 GHz as long as no potential victim service is being detected. As soon as a victim service is detected within a specific band, the devices need to react accordingly by avoiding this specific band using an avoidance technique.

At present, it is planned to include in the regulation in Europe a so-called "phased approach" for the deployment of UWB devices without DAA (device of the first generation (1G device)) in the band between 4,2 GHz and 4,8 GHz. In other words, UWB devices without DAA will be able to use that band with an operation power of -41,3 dBm/MHz until the above mentioned date to be defined (around December 2010/2012).

However, although these devices can be sold only until the end of the phased approach whereas after the phased approach, only the 2G UWB devices will be the only devices allowed to be sold in Europe, the operation of these 1G UWB devices will be nevertheless allowed after the end of the phased approach.

Thus, at present, there is no solution to establish a reliable communication between old 1G devices and the new 2G UWB devices; And, this missing solution is very often used as an argument against the phased approach.

On another hand, in the US, the band 3,1 GHz to 10,6 GHz is open for the deployment of UWB with a maximum operation power of -41,3 dBm/MHz without any additional restrictions like DAA or phased approach. Again, at present, there is no solution to establish a reliable communication between an old 1G device operating only in the phased approach band and an US UWB device capable of operating within the full band 3,1 GHz to 4,8 GHz. Further there is also no solution for establishing a reliable communication without interferences between an US device provided with no DAA mechanism, and a 2G UWB device.

According to an embodiment, it is proposed an UWB device, and a method for controlling the same, permitting the interoperability between different classes of devices in the same piconet at least in a great part of the band 3,1 to 4,8GHz

According to another embodiment, it is also proposed to reduce interference generated by non coordinated UWB devices into a piconet.

According to an aspect, it is proposed an UWB device, comprising a first control unit adapted to control the operation of the device according to a first operation mode, for example a high data rate operation mode. Such a device further comprises a second control unit adapted to control the operation of the device according to a low duty cycle (LDC) operation mode, and activation means adapted to activate selectively said first control unit or said second control unit.

Devices using Ultra Wide Band (UWB) technology with a low duty cycle (LDC) in the frequencies band 3,4-4,8 GHz, are intended for specific applications, which are mainly foreseen to be focused on sensor network in homes, offices, or industrial environment. An UWB LDC device has limitations based on burst duration and burst intervals. And, such an UWB LDC device is allowed in Europe without any time limit with a transmission power of -41, 3 dBm/MHz in a band which is at present between 3,4 GHz and 4,8 GHz.

Thus, the inventors have observed that by implementing the LDC mode into an existing UWB device having already a first operation mode different from said LDC mode, for example a high data rate mode or a continuous low data rate operation mode, it is possible to permit the interoperability between different classes of devices in the same piconet at least in the band 3,4 to 4,8 GHz. Of course if the LDC operation mode is further allowed in the future in the band 3,1 to 3,4 GHz, it will be possible to permit the interoperability between different classes of devices in the same piconet within the full band 3,1 to 4,8 GHz.

Further, since the implementation of the LDC rules can be done for example without changing the hardware of an implementation, for example by a simple software upgrade, it is possible to implement this LDC operation mode even in devices (for example old 1G UWB devices or US devices) which do not have this capability from the very beginning.

Furthermore, even phased approach devices can use a LDC operation mode to guarantee a basic communication performance in the other bands open for the LDC operation.

Further, US devices can operate in Europe and can join piconets by using the LDC operation mode.

As indicated above, although the first operation mode may be a high data rate operation mode, generally already implemented in an existing UWB device, the operation mode is not limited to said high data rate operation mode but can include for example other conventional operation modes, like for example a low data rate continuous operation mode. More generally, the first operation mode may be a high duty cycle operation mode which might be used not only for high data rate transmissions or a continuous low data rate transmission but also for example for critical QoS (Quality of Service) or real time applications.

According to another embodiment, if an existing UWB LDC device is provided with another control unit capable of controlling the operation of the device according to another operation mode as for example a high duty cycle operation mode, thus by selecting said high duty cycle operation mode, the device can operate for example in the phased approach band between 4,2 and 4,8 GHz with full speed.

At present, the low duty cycle (LDC) set of regulation proposes to introduce limitations based on burst duration and burst intervals. In other words, according to an embodiment, said low duty cycle operation mode includes limitations based on emitted signal duration (burst duration) and time intervals between emitted signals (burst intervals).

For example, said limitations based on emitted signal duration include a maximum time duration for an emitted signal and a maximum ratio of the sum of all emitted signals time durations relative to a given period, and said limitations based on time intervals between emitted signals include an averaged duration of a time interval between two consecutive emitted signals and a minimum sum of all the time intervals durations per second.

According to an embodiment, said second control unit comprises first measuring means adapted to determine the duration of an emitted signal or burst and second measuring means adapted to determine the time interval between two consecutive emitted signals or bursts.

Said first measuring means may comprise for example first counter and said second measuring means may comprise for example a second counter.

According to a non limitative embodiment, the device comprises a MAC layer control processor which can include both control units.

Said UWB device may be for example a first generation (1G) UWB device further provided with said low duty cycle operation mode.

According to another aspect, it is proposed a method of controlling the operation of an UWB device, comprising providing said device with a first operation mode and a low duty cycle operation mode and selecting the operation mode of said device.

According to an embodiment, controlling the operation of the device in said low duty cycle operation mode comprises determining the duration of an emitted signal and determining the time interval between two consecutive emitted signals.

Other advantages and features of the invention will appear on examining the detailed description of embodiments, these being in no way limiting and of the appended drawings, in which:
- figure 1 illustrates diagrammatically the internal protocol structure of an embodiment of a wireless UWB device,
- figure 2 illustrates diagrammatically an example of the internal structure of a MAC layer control processor,
- figure 3 illustrates diagrammatically an example of a method of controlling the operation of an UWB device,
- figure 4 illustrates diagrammatically but more in details an example of implementation of a LDC operation mode,
- figure 5 illustrates diagrammatically but more in details, an example of an internal structure of a second control unit allowing an operation of the device in accordance with the LDC operation mode, and
- figure 6 illustrates an example of superframes in a WiMedia Media Access Control (MAC).

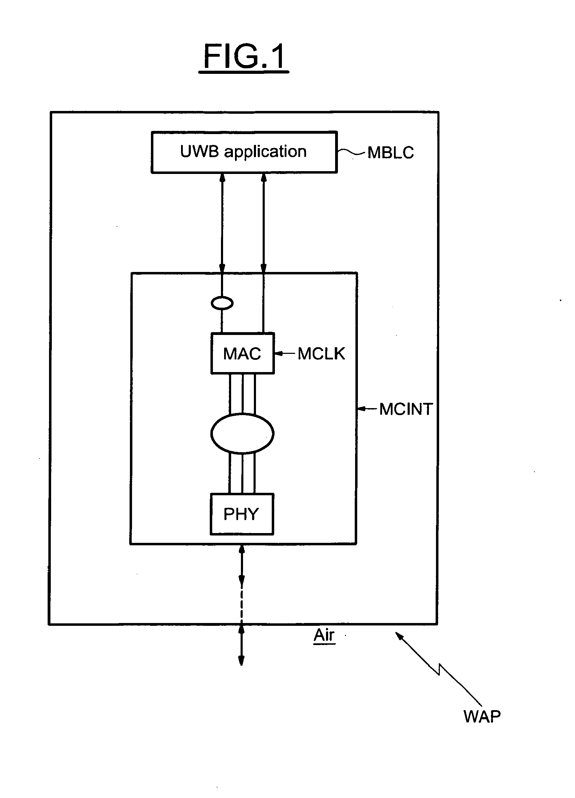

Figure 1 discloses an example of a wireless communication device or transceiver WAP.

Such a wireless UWB device WAP belongs for example to an OFDM based Ultra Wide Band Communication system.

The wireless device WAP comprises an OFDM based UWB communication interface MCINT connected between the UWB application block MBLC and the communication medium (here air).

This communication interface MCINT comprises an UWB MAC layer clocked by a clock signal MCLK and connected to the PHY layer and to the UWB application block MBLC.

For further details concerning the MAC layer and the PHY layer of the communication interface, the man skilled in the art may refer to the High Rate Ultra Wideband PHY and MAC Standard, Standard ECMA-368, 1st edition, December 2005, and to the MAC-PHY Interface for ECMA-368, Standard ECMA-369, 1st edition, December 2005.

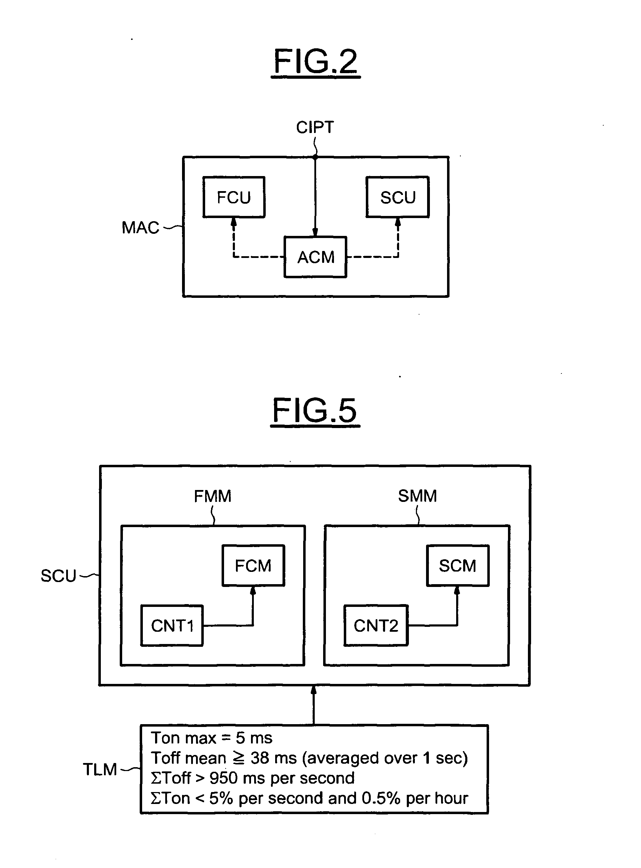

The MAC layer manages in particular the emission/reception of the UWB data stream according to a first operation mode and is for example incorporated by software in a first control unit (or first software module) FCU of a control processor globally referenced with the reference sign MAC (figures 1 and 2).

The first operation mode, controlled here by the first control unit of the MAC processor, is for example a high duty cycle operation mode and more particularly used for high data rate transmissions (for example from 50 Megabits per second until 2 Gegabits per second). However, it is also possible to use this high duty cycle operation mode for a continuous low data rate transmission or for a critical Quality of Service (QoS) or for real time applications.

The device WAP provided with the first control unit FCU which manages a conventional emission/reception of the UWB data stream according to the first operation mode, may be for example a so-called 1G UWB device (device of the first generation) which has no means of DAA and operates only in the phased approach band (4,2 GHz to 4,8 GHz) with a transmission power of -41,3 dBm/MHz.

However, this device WAP is further provided with a second control unit SCU adapted to control the operation of the device according to a low duty cycle (LDC) operation mode.

This second control unit may be implemented for example also by software in the form of a software module. In the present example, both control units FCU and SCU are incorporated within the MAC layer control processor. However, although this solution is particularly simple since it may be implemented by an upgrade of the existing software of the control processor MAC, other solutions are possible, for example implementing in the device a separate controller programmed for controlling the operation of the device according to the LDC operation mode.

Further to these first and second control units, the device WAP comprises also activation means ACM adapted to activate selectively said first control unit or said second control unit. In the present example, but in a non limitative way, activation means ACM may also be realized by software within the control processor MAC.

In the described embodiment, these activation means ACM are adapted to receive a command signal from an input command CIPT and, in response to this command signal, the activation ACM activate either the first control unit or the second control unit. This command signal may come for example from an upper layer or from another device belonging to a piconet and asking said device WAP to switch into the LDC mode for joining the piconet, as it will be explained more in details thereafter.

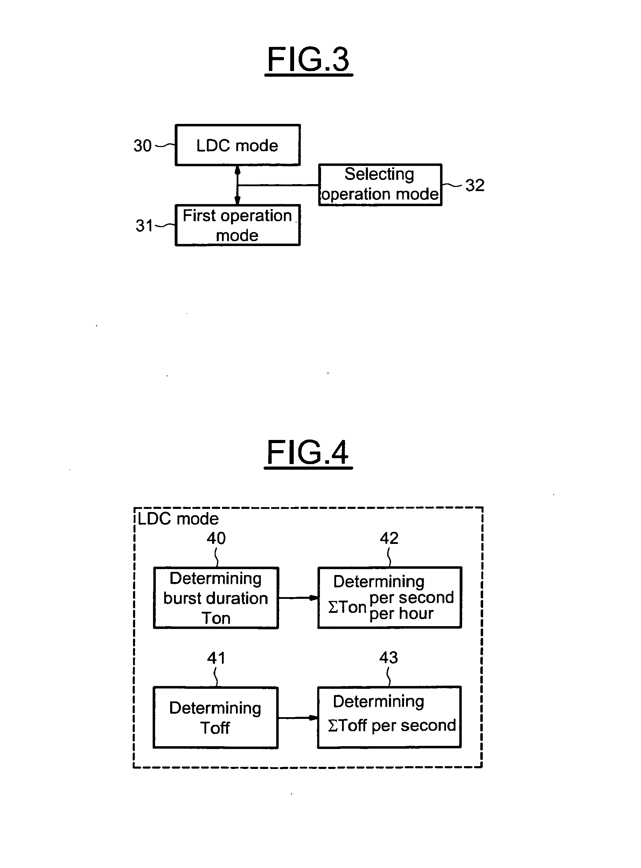

This selection of the operation mode between the LDC mode and the first operation mode is also diagrammatically illustrated in figure 3 by the steps having the reference signs 30, 31 and 32.

The band of frequencies allocated to UWB devices operating in the LDC operating mode is at present between 3,4 GHz and 4,8 GHz with a transmission power of -41,3 dBm/MHz. Thus, this LDC mode will permit an interoperability with UWB devices (as for example 2G devices) provided with DAA mechanism and operating in the band 3,4 GHz to 4,8 GHz. If in the future the band of frequencies allocated to UWB devices operating in the LDC operating mode includes also the band 3,1 to 3,4 GHz, this LDC mode will permit an interoperability with UWB devices (as for example 2G devices) provided with DAA mechanism and allowed to operate in the full band 3,1 GHz to 4,8 GHz.

The low duty cycle mode includes limitations TLM (figure 5) based on burst duration and time intervals between bursts.

A burst is here an emitted signal whose time duration (Ton) is not related to its bandwidth.

Further, the time interval (Toff) is the time interval between two consecutive bursts when the UWB emission is kept idle.

The duty cycle is defined here as the ratio, expressed as a percentage, of the transmitter sum of all bursts duration "on" relative to a given period.

For the LDC limitation, this given period is the second and the hour.

Thus, as indicated in figure 5, the limitations required for the LDC mode are the following:
Ton max = 5 ms
Toff mean ≥ 38 ms (averaged over 1 second)
Σ Toff > 950 ms per second
Σ Ton < 5% per second and 0, 5% per hour.

Thus, in order to comply with these time limitations, controlling the operation of the device in the low duty cycle operation mode comprises, as illustrated in figure 4, determining (step 40) the Ton and determining the sum of Ton per second and per hour (step 42).

Further, controlling the operation in LDC mode comprises also determining the Toff (step 41) and determining the sum of the Toff per second (step 43).

For performing these steps, a possible solution consists in providing the second control unit SCU with first measuring means FMM adapted in particular to determine the duration Ton and with second measuring means SMM adapted in particular to determine the time interval Toff between two consecutive bursts.

In an embodiment, said first measuring means comprises a first counter CNT1 for counting the times of access to the channel (here air). From this count value, first calculation means can determine the sum of the Ton per second and per hour and compare the Ton max to 5 ms.

A second counter CNT2 can count the time intervals between two consecutive bursts and second calculation means SCM can determine the sum of the Toff per second as well as the Toff means averaged over one second.

Although such an embodiment permits to determine precisely the times of access to the channel (air), another solution for complying with the LDC requirements is possible, using the Media Access Slots (MAS) of superframes conventionally used in the WiMedia MAC protocol, as it will be now explained.

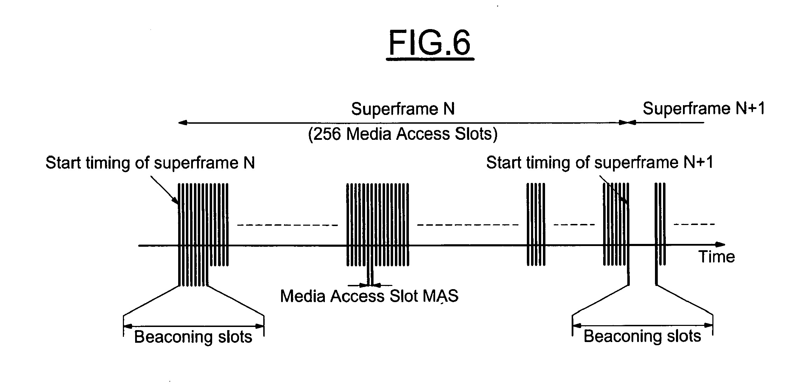

WPAN MAC protocols have a distributed nature where there is no central terminal or base station to assign the medium access. There, in contrast to a mobile radio terminal, a WPAN transceiver has much higher flexibility to allocate the transmission slot and formats. The allocation of the communication resources is a distributed process. The allocation to a specific time slot in the super frame can be modified from one superframe to the next. The controlling entity is the WPAN-MAC layer of the communicating terminals. The allocation is based on the requested data rate and the type of service to be transmitted. Furthermore, the available resources are taken into account in the allocation process. The MAC layer requests a reservation for a specific time slot (called also Media Access Slot MAS; see fig. 6) or a number of time slots based on these constraints. These constraints can be split into local constraints, like the data rate to be transmitted or received and network wide constraints like the already existing slot reservation.

An example of distributed WPAN-MAC is MBOA MAC.

It is thus possible to implement within the second control unit SCU a timing scheme that allows for the fulfillment of the LDC limitations using the scheme of the WiMedia MAC illustrated in figure 6.

More precisely, the second control unit will for example reserve a beaconing slot and a single Media Access Slot for the communication of the device WAP according to the LDC operation mode. If needed, up to 12 additional MAS during one second could be used. As a matter of fact, the duration of each MAS is equal to around 256 µs. And by using this restriction, an average activation factor of 0,5 % over one hour and 5 % over one second can be implemented, thus complying with the LDC limitations.

Assuming now the existence of a WPAN network, for example a so-called "piconet", which allows a number of independent UWB devices to communicate with each other in accordance with the WiMedia MAC protocol.

The basic component of a piconet is a data independent device. Such an independent data may be for example a personal computer or the like.

One independent data device is required to assume the role of the piconet coordinator.

The coordinator provides the basic timing for the piconet with a so-called "beacon" which is a part of a super frame as it is illustrated on figure 6.

The coordinator can communicate with the independent data devices. Further, two independent data devices can communicate with each other.

Assuming also that all the UWB devices communicating within this piconet are 2G UWB devices and that the 1G device WAP provided with the second control unit SCU wants to join this piconet.

Assuming also that the 2G devices of the piconet are communicating within for example a band of frequency between 3,4 GHz and 4,2 GHz, which is outside of the phased approach band using by the 1G device WAP.

Thus, in order to join this piconet, the WAP will send a request within one beaconing slot indicating its presence and its capability to either communicate within the phased approach band or by using a LDC mode.

If the 2G devices of the piconet have the possibility to switch into the phased approach frequencies band, and if there in no victim system in the vicinity of the piconet, the communication between the 1G device WAP and the 2G devices of the piconet can be established within this phased approach frequencies band.

But, if the 2G devices of the piconet cannot switch to the phased approach frequency band, or if there is a victim system prohibiting the communication within said phased approach frequencies band (because the 1G device WAP in not provided with DAA mechanism) the WAP device will receive a command signal for switching into the LDC mode. In such a case, the communication between the device WAP and the piconet is possible and further without generating interferences within the victim system. As a matter of fact, it has been observed that communication in a LDC operation mode fulfills the requirements of interference avoidance towards victim systems.

## Claims

1. UWB device, comprising a first control unit (FCU) adapted to control the operation of the device according to a first operation mode, a second control unit (SCU) adapted to control the operation of the device according to a low duty cycle operation mode, and activation means (ACM) adapted to activate selectively said first control unit or said second control unit.

2. Device according to claim 1, wherein said first operation mode is a high duty cycle operation mode.

3. Device according to any one of the preceding claims, wherein said low duty cycle mode includes limitations (TLM) based on emitted signal duration and time intervals between emitted signals.

4. Device according to claim 3, wherein said limitations (TLM) based on emitted signal duration include a maximum time duration for an emitted signal and a maximum ratio of the sum of all emitted signals time durations relative to a given period, and said limitations (TLM) based on time intervals between emitted signals include an averaged duration of a time interval between two consecutive emitted signals and a minimum sum of all the time intervals durations per second.

5. Device according to any one of the preceding claims, wherein said second control unit (SCU) comprises first measuring means (FMM) adapted to determine the duration (Ton) of an emitted signal and second measuring means (SMM) adapted to determine the time interval (Toff) between two consecutive emitted signals.

6. Device according to claim 5, wherein said first measuring means comprises a first counter (CNT1) and said second measuring means comprises a second counter (CNT2).

7. Device according to any one of the preceding claims, comprising a MAC layer control processor (MAC) including both control units.

8. Device according to any one of the preceding claims, being a first generation (1G) UWB device further provided with said low duty cycle operation mode.

9. Method of controlling the operation of an UWB device, comprising providing said device with a first operation mode and with a low duty cycle operation mode and selecting (32) the operation mode of said device.

10. Method according to claim 9, wherein said first operation mode is a high duty cycle operation mode.

11. Method according to any one of the claims 9 to 10, wherein said low duty cycle mode includes limitations (TLM) based on emitted signal duration and time intervals between emitted signals.

12. Method according to claim 11, wherein said limitations (TLM) based on emitted signal duration include a maximum time duration for an emitted signal and a maximum ratio of the sum of all emitted signals time durations relative to a given period, and said limitations (TLM) based on time intervals between emitted signals include an averaged duration of a time interval between two consecutive emitted signals and a minimum sum of all the time intervals durations per second.

13. Method according to any one of claims 9 to 12, wherein controlling the operation of the device in said low duty cycle operation mode comprises determining the duration of an emitted signal and determining the time interval between two consecutive emitted signals.

14. Method according to any one of the claims 9 to 13, comprising providing a first generation (1G) UWB device with said low duty cycle operation mode.
